# EUROPEAN PATENT APPLICATION

(11) **EP 4 826 531 A1**
(43) Date of publication of application: **21.10.2026**
(21) Application number: 25171398.8
(22) Date of filing: 17.04.2025
(51) Int. Cl.: G06F 9/48, G06F 13/26

(54) **DATA PROCESSING APPARATUS WITH AN EFFICIENT INTERRUPT CONTROLLER**

(71) Applicant: SCI Semiconductor Limited, Sheffield, South Yorkshire S1 2BJ (GB)
(72) Inventor: CHISNALL, David, Cambridge, CB4 1GB (GB)
(74) Representative: Patentship Patentanwaltsgesellschaft mbH

(57) **Abstract**

A data processing apparatus, e.g. a memory constrained system (100) is disclosed, comprising a main processor (110) configured to process data by executing a plurality of threads, wherein each thread is associated with a thread priority. Moreover, the data processing apparatus (100) comprises a memory configured to store data and connected with the main processor (110) by a memory interconnect for exchanging data between the main processor (110) and the memory. The data processing apparatus (100) further comprises an interrupt controller (120) for handling a plurality of interrupts, wherein each interrupt is associated with an interrupt priority and wherein the interrupt controller (120) is configured to maintain an interrupt counter for each interrupt indicating the number of times the interrupt has been fired. The main processor (110) is further configured to implement a scheduler for scheduling the execution of the plurality of threads, wherein the scheduler is configured to inform the interrupt controller (120) about (a) the thread priority of a currently running thread of the plurality of threads and (b) for each interrupt the highest thread priority of one or more threads of the plurality of threads currently waiting for the respective interrupt. The scheduler is further configured to select a thread of the plurality of threads to be executed after the currently running thread.

## Description

### TECHNICAL FIELD

The invention relates to electronic computing devices. More specifically, the invention relates to a data processing apparatus with an efficient interrupt controller.

### BACKGROUND OF THE INVENTION

The usage of interrupts in computing systems differs considerably between big operating systems and embedded systems. In large operating systems, interrupts typically run tiny interrupt handlers that make one or more threads runnable and then rely on a scheduler to handle the event. In embedded systems it is common to run key parts of the workload from interrupt handlers.

Interrupts are computationally fairly expensive and so high-performance systems alternate between polling and interrupt-driven modes, where code can poll for as long as there are pending events and then enter a blocking mode when there have been no events for a short time.

The conventional embedded approach of running interrupt-processing code directly from interrupt handlers is not applicable in a system with mutual distrust because code run from interrupt handlers can see the state of interrupted threads, breaking confidentiality and integrity guarantees. To address this shortcoming it has been suggested to employ lightweight threads for embedded use, rather than interrupt handlers.

When using threads to respond to external events, an interrupt may mark a thread as able to run, but, if that thread has lower priority than the current thread, running that interrupt handler has adversely impacted the performance of the high-priority thread. It is desirable to defer interrupt handlers if running them would not change the currently executing thread. Embedded processors can do this for code that runs directly from interrupt handlers by setting interrupt priorities, which prevents a low-priority interrupt from being delivered while handling a high-priority interrupt. It would be desirable having a mechanism that efficiently combines the benefits of both approaches.

### SUMMARY OF THE INVENTION

It is therefore an object of the invention to provide a data processing apparatus with an efficient interrupt controller, in particular an efficient interrupt controller allowing to unify hardware interrupts with futex-like software events.

The foregoing and other objects are achieved by the subject matter of the independent claims. Further implementation forms are apparent from the dependent claims, the description and the figures.

According to a first aspect a data processing apparatus, e.g. a memory constrained system is provided, wherein the data processing apparatus according to the first aspect comprises at least one main processor, for instance, a core with a single interrupt line, configured to process data by executing sequentially a plurality of threads, wherein each thread is associated with an adjustable thread priority. Moreover, the data processing apparatus comprises at least one memory, for instance, an SRAM, configured to store data and connected with the main processor by a memory interconnect, such as a memory bus, for exchanging data between the main processor and the memory. The data processing apparatus according to the first aspect further comprises an interrupt controller, which may be connected to the main processor via the single interrupt line, for handling a plurality of interrupts, i.e. external events. Each interrupt is associated with a dynamic, adjustable interrupt priority and the interrupt controller is configured to maintain an interrupt counter for each interrupt indicating the number of times the interrupt has been fired. The main processor of the data processing apparatus according to the first aspect is further configured to implement a scheduler for scheduling the execution of the plurality of threads, wherein the scheduler is configured to inform the interrupt controller about (a) the thread priority of the currently running thread of the plurality of threads and (b) for each interrupt the highest thread priority of the one or more threads currently waiting for the respective interrupt. The scheduler is further configured to select the thread of the plurality of threads to be executed after the currently running thread.

In a further possible implementation form, the scheduler is configured to implement a state machine for each of the plurality of threads, wherein the state machine comprises at least one or more sleeping states, a runnable state and a running state.

In a further possible implementation form, for selecting the thread of the plurality of threads to be executed after the currently running thread, if an interrupt of the plurality of interrupts is fired with an interrupt priority at or greater than the thread priority of the currently running thread, the scheduler changes the state of any sleeping threads waiting for the interrupt to runnable threads and the state of the sleeping thread with the highest thread priority of the sleeping threads to the running thread. In other words, the sleeping thread with the highest thread priority is selected to be executed after the currently running thread, if the priority of the interrupt is higher than the priority of the currently running thread.

In a further possible implementation form, when one or more sleeping threads of the plurality of threads are waiting for an interrupt, the scheduler implemented by the main processor is configured to adapt the interrupt priority to the thread priority of the sleeping thread with the highest thread priority of the sleeping threads.

In a further possible implementation form, the scheduler is configured to adjust, i.e. change the adjustable thread priority of each thread of the plurality of threads.

In a further possible implementation form, the scheduler is configured to adjust the thread priority of a thread, in response to resource contention, for instance, for allowing a low priority thread to be boosted to the priority of a high priority thread waiting for a resource of the data processing apparatus occupied by the low priority thread.

In a further possible implementation form, the plurality of interrupt counters indicating the number of times a respective interrupt has been fired are implemented by a plurality of memory words (herein also referred to as futex,fast userspace mutual exclusion, words) stored at a plurality of memory locations of the memory.

In a further possible implementation form, for deciding whether to go to sleep the currently running thread is configured to perform for one or more interrupts of the plurality of interrupts a "futex_wait"-like operation based on the respective memory word stored at the respective memory location of the memory and a respective expected, i.e. previous interrupt counter value of the respective interrupt.

In a further possible implementation form, the currently running thread is configured to go to sleep, if the respective current value of the respective interrupt counter is equal to the expected, i.e. previous interrupt counter value.

In a further possible implementation form, the scheduler is configured to atomically check whether the respective current value of the respective interrupt counter is equal to the expected, i.e. previous interrupt counter value for allowing the currently running thread to go to sleep.

In a further possible implementation form, for each of the plurality of interrupts the scheduler is configured to perform a "futex_wake" like operation based on the respective memory word representing the interrupt counter for the respective interrupt for waking one or more of the plurality of threads currently waiting for the respective interrupt to fire, i.e. for the corresponding interrupt counter value to change.

As used herein, a "futex_wait" like operation or a "futex wake" like operation may be a "futex wait operation or a "futex wake" operation or operations implemented in other operating systems having different names, but essentially the same functionality as a "futex wait operation or a "futex wake" operation.

In a further possible implementation form, the plurality of interrupts comprise one or more level-triggered interrupts and one or more edge-triggered interrupts, wherein for maintaining the respective interrupt counter for each of the one or more level-triggered interrupts the interrupt controller of the data processing apparatus according to the first aspect is configured to increment the respective interrupt counter, when an interrupt line associated with the respective level-triggered interrupt is raised, and to ignore the interrupt line, until the interrupt line is lowered again.

Embodiments of the invention may be implemented in hardware and/or software.

### BRIEF DESCRIPTION OF THE DRAWINGS

Further embodiments of the invention will be described with respect to the following figures, wherein:
Fig. 1 shows a schematic diagram illustrating a data processing apparatus according to an embodiment with an interrupt controller;
Fig. 2a shows a schematic diagram illustrating preemptive multitasking implemented by a scheduler and two threads according to an embodiment;
Fig. 2b shows context switching in response to an external event as may be implemented by the data processing apparatus according to an embodiment;
Fig. 2c shows an example of an interruption of a thread by an interrupt that a lower-priority thread is waiting for;
Fig. 3 shows the handling of an interrupt by a thread implemented by a data processing apparatus according to an embodiment; and
Fig. 4 shows a schematic diagram illustrating a state diagram of a thread implemented by a data processing apparatus according to an embodiment.

In the figures, identical reference signs will be used for identical or at least functionally equivalent features.

### DETAILED DESCRIPTION OF EMBODIMENTS

In the following detailed description, reference is made to the accompanying drawings, which form part of the disclosure, and in which are shown, by way of illustration, specific aspects in which the present invention may be implemented. It is understood that other aspects may be utilized and structural or logical changes may be made without departing from the scope of the present invention. The following detailed description, therefore, is not to be taken in a limiting sense, as the scope of the present invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

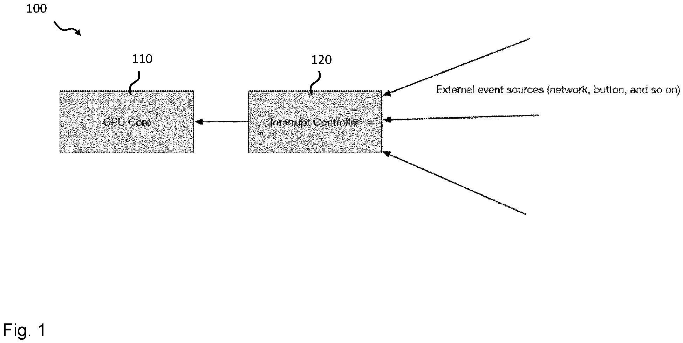

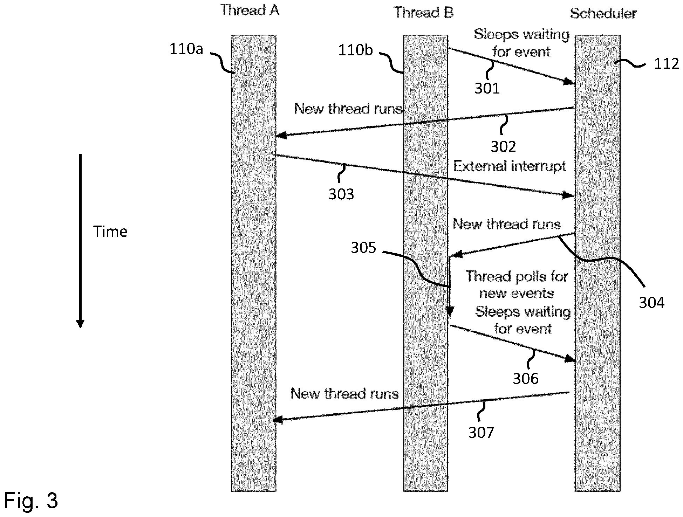

Figure 1 shows an embodiment of a data processing apparatus 100, for instance, a memory constrained system 100, comprising at least one main processor 110, for instance, a core 110 with a single interrupt line, configured to process data by executing sequentially a plurality of threads, for instance the threads 110a,b illustrated in figure 3. As will be described in more detail below, each thread 110a,b is associated with an adjustable thread priority. The data processing apparatus 100 further comprises at least one memory, for instance, a SRAM, configured to store data and connected with the main processor 110 by a memory interconnect, in particular a memory bus, for exchanging data between the main processor 110 and the memory. As illustrated in figure 1, the data processing apparatus 100 further comprises a hardware interrupt controller 120 for handling interrupts, which will be described in more detail below. In an embodiment, the hardware interrupt controller 120 may be connected to the main processor 110 via a single interrupt line for handling a plurality of interrupts (also referred to as interrupt events).

In an embodiment, the plurality of interrupts may comprise one or more level-triggered interrupts and one or more edge-triggered interrupts that may be raised by one or more further peripheral devices the data processing apparatus 100 may comprise or be connected to. As will be appreciated, for edge-triggered interrupts a peripheral may raise the interrupt, when a state changes, such as a packet arrived, while for level-triggered interrupts a peripheral raises an interrupt when it enters a new state and keeps it raised for as long as it is in that state.

Before describing the functionality of the interrupt controller 120 and the interaction with a scheduler 112 implemented by the main processor 110 of the data processing apparatus 100 further below in the following some further information about conventional interrupt handling is provided.

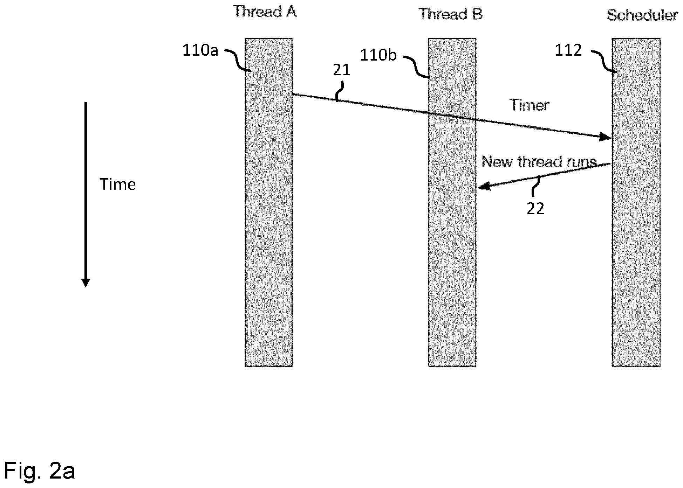

Figure 2a shows a schematic diagram illustrating preemptive multitasking implemented by a scheduler 112 and two threads 110a,b. The thread A 110a runs until a hardware timer expires and raises a timer interrupt (see step 21 in figure 2a). This transfers control to the scheduler 112, which then determines the next thread to run, namely in this example thread B 111b (see step 22 in figure 2a).

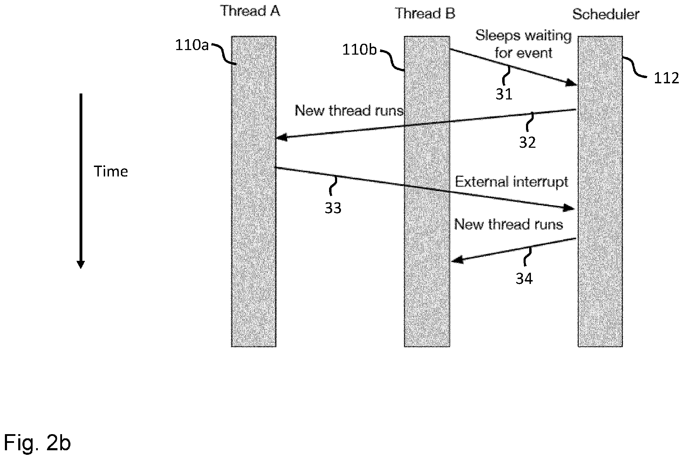

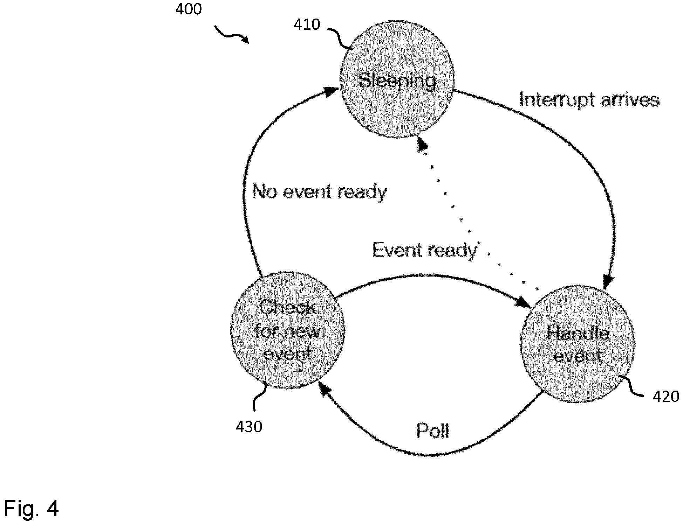

Figure 2b illustrates context switching in response to an external event, such as a message on a UART or a network interface, as may be implemented by the data processing apparatus 100 according to an embodiment. The thread B 110b waits for the event by explicitly invoking the scheduler 112 and indicating the event for which it intends to wait (see step 31 in figure 2b). The scheduler 112 marks thread B 110b as having entered the sleeping state 410 (illustrated in figure 4) and then determines that the thread A 110a is the next runnable thread so begins executing the thread A 110a (see step 32 in figure 2b). The external event raises an interrupt, which causes control to transition to the scheduler 112 (see step 33 in figure 2b), just as the timer interrupt did in the example of figure 2a. The scheduler 112 then determines that the thread B 110b was waiting for the event that has arrived and moves it to the runnable state 420 (illustrated in figure 4) and resumes executing the thread B 110b (see step 34 in figure 2b), which may then enter the polling loop shown in figure 4 before sleeping again.

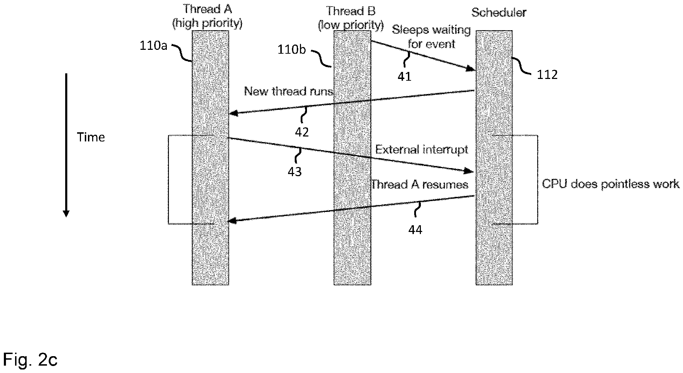

Figure 2c shows the interruption of a thread of the example of figure 2a by an interrupt that a lower-priority thread is waiting for. As in the case of the example shown in figure 2b, an interrupt fires while the thread A 110a is running (see steps 41, 42 and 43 in figure 2c). In the example shown in figure 2c, the thread B 110b is of lower priority than the interrupted thread A 110a and so, even though it enters a runnable state, it is not selected to run next by the scheduler 112. The transition from the thread A 110a to the scheduler 112 and back in response to the interrupt causes unpredictable latency, i.e. "jitter" for thread A 110a (see steps 43 and 44 of figure 2c). As will be described in more detail in the following, embodiments of the data processing apparatus 100 disclosed herein allow to eliminate this jitter and make it possible for the scheduler 112 to defer the work of handling the interrupt until either the thread A 110a yields, or until the dynamic priority of the thread B 110b is increased such that it would be run if woken.

As will be described in more detail in the following, embodiments of the data processing apparatus 100 disclosed herein allow to avoid the unnecessary work performed by the main processor, i.e. CPU illustrated in figure 2c. To this end, each interrupt is associated with a dynamic, adjustable interrupt priority and the interrupt controller 120 of the data processing apparatus 100 is configured to maintain an interrupt counter for each interrupt indicating the number of times the interrupt has been fired.

As will be further described in more detail in the following under reference to figure 3, the main processor 110 of the data processing apparatus 100 is further configured to implement a scheduler 112 for scheduling the execution of the plurality of threads 110a,b. In an embodiment, the scheduler 112 may itself be a thread 112 implemented by the main processor 110 of the data processing apparatus 100. The software-implemented scheduler 112 is configured to inform the interrupt controller 120 about (a) the thread priority of the currently running thread of the plurality of threads 110a,b and (b) for each interrupt the highest thread priority of the one or more threads currently waiting for the respective interrupt. The scheduler 112 is further configured to select the thread of the plurality of threads to be executed after the currently running thread.

Figure 3 shows the handling of an interrupt by one of the threads 110a,b implemented by the data processing apparatus 100 according to an embodiment. In a first stage 301 thread B 110b enters the sleep state 410 waiting for an event. In a second stage 302 thread A 110a (a lower-priority thread) runs until the interrupt for which thread B 110b was waiting is delivered (see 303 in figure 3). At this point, the scheduler 112 runs thread B 110b (see 304 in figure 3). Thread B 110b can directly query the futex word in the interrupt controller 120 to determine whether more events are pending without invoking the scheduler 112 and continues to execute for as long as at least one event is pending (see 305 in figure 3). Thread B 110b then sleeps again waiting for the interrupt (see 306 in figure 3) and the scheduler 112 resumes thread A 110a (see 307 in figure 3).

Figure 4 shows a schematic diagram illustrating a state machine 400 for each of the plurality of threads 110a,b implemented by the scheduler 112 of the data processing apparatus 100 according to an embodiment. As illustrated in figure 4, the state machine 400 comprises at least one sleeping state 410, a runnable state and a running state. As will be appreciated, the state machine 400 illustrated in figure 4 indicates the lifecycle of thread B 110b in figure 3. Thread B 110b initially enters the sleeping state 401. When the interrupt occurs, thread B 110b enters state 420 and processes the event. Thread B 110b then alternates between states 430 and 420 by reading the counter exposed by the interrupt controller 120, without needing to interact with the scheduler 112. Finally, when the events have all been processed, thread B 110b invokes the scheduler 112 to reenter state 410.

In an embodiment, for selecting the thread of the plurality of threads to be executed after the currently running thread, if an interrupt of the plurality of interrupts is fired with an interrupt priority at or greater than the thread priority of the currently running thread, the scheduler 112 is configured to change any sleeping threads waiting for the interrupt to runnable threads and the sleeping thread with the highest thread priority of the sleeping threads to the running thread. Moreover, in an embodiment, if an interrupt of the plurality of interrupts is fired, the scheduler is configured to adapt the interrupt priority to the thread priority of the sleeping thread with the highest thread priority of the sleeping threads waiting for the interrupt. Thus, in an embodiment, when an interrupt fires (assuming everything else is working correctly), the interrupt will wake one or more threads, at least one of which will have equal or higher priority than the interrupted thread. The interrupt threshold may then be set to the thread priority of the newly scheduled thread. Thus, it is not necessary to adjust the priority of other interrupts, unless the highest-priority thread waiting for them was the one just woken.

In an embodiment, the scheduler 112 is configured to adjust the thread priority of each thread of the plurality of threads 110a,b, for instance, in response to resource contention.

In an embodiment, the plurality of interrupt counters indicating the number of times a respective interrupt has been fired are implemented by a plurality of memory words stored at a plurality of memory locations of the memory. For deciding whether to go to sleep the currently running thread is configured to perform for one or more interrupts a "futex_wait"-like operation, e.g. a "futex_wait" operation based on the respective memory word stored at the respective memory location of the memory and a respective expected interrupt counter value of the respective interrupt. Based on the "futex_wait"-like operation the currently running thread, for instance, is configured to go to sleep, if the respective current value of the respective interrupt counter, i.e. the respective memory word is equal to the expected interrupt counter value. In an embodiment, the scheduler 112 is configured to atomically check whether the respective current value of the respective interrupt counter is equal to the expected interrupt counter value for allowing the currently running thread to go to sleep.

In an embodiment, for each of the interrupts the scheduler 112 is configured to perform a "futex_wake"-like operation, e.g. a "futex_wake" operation based on the respective memory word representing the interrupt counter for the respective interrupt when the interrupt controller 120 delivers an interrupt to wake one or more of the plurality of threads 110a,b currently waiting for the respective interrupt to fire. In other words, the scheduler 112 does the equivalent of a "futex-wake" operation. The thread explicitly waits by calling "futex_wait" or some equivalent. If this is a normal futex, some other thread will wake it by calling "futex_wake". For interrupt futexes, the scheduler 112 internally does the equivalent of a "futex_wake" as if the interrupt controller 120 had called "futex_wake".

As already described above, in an embodiment, the plurality of interrupts comprise one or more level-triggered interrupts and one or more edge-triggered interrupts, wherein for maintaining the respective interrupt counter for each of the one or more level-triggered interrupts the interrupt controller 120 is configured to increment the respective interrupt counter, when an interrupt line associated with the respective level-triggered interrupt is raised, and to ignore the interrupt line, until the interrupt line is lowered again. As will be appreciated, this allows to transparently translate level-triggered interrupts into edge-triggered ones.

To further illustrate the above disclosed embodiments of the data processing apparatus 100 in the following a simple example will be described with three threads, A, B, and C with priorities 1, 2, and 3, where higher numbers represent higher priorities, and two interrupts 1 and 2.
1. C runs, because it has the highest priority. The interrupt delivery threshold is set to 3 by the interrupt controller 120.
2. C then waits on interrupt 1 (as described above, for every interrupt there is a futex word, e.g. 32 bits which defines the interrupt counter). C obtains the pointer to the futex word corresponding to the counter for interrupt 1 (at one earlier stage C might have obtained this pointer); before step 1 C reads the current counter value. C will call the futex_wait operation with the pointer to the counter value for interrupt 1 and the expected counter value for interrupt 1 as arguments so that C waits for interrupt 1. The scheduler 112 sees that C is waiting for interrupt 1 and therefore sets the priority of interrupt 1 to the value 3.
3. B is the currently running thread because it is the highest-priority runnable thread. The interrupt delivery threshold is 2.
4. B waits on interrupt 2. The priority of interrupt 2 is set by the scheduler 112 to the value 2 (the priority of B).
5. A runs, it is the highest-priority (and only) runnable thread. The interrupt delivery threshold is 1.
6. A waits for interrupt 1. The priority of interrupt 1 is unchanged because it was a higher priority than A's priority already.
7. No threads are running, threshold is 0. The main processor 110 can sleep until the next interrupt arrives.
8. Interrupt 1 fires. The interrupt controller 120 wakes the CPU 110. The scheduler 112 will do the "futex_wake"-like operation, e.g. a "futex_wake" operation on the futexes associated with interrupt 1. A and C are woken (marked as runnable). The threshold of interrupt 1 is set to zero, all threads waiting for it have been woken.
9. C runs. The interrupt delivery threshold is 3.
10. Interrupt 2 is triggered. The interrupt controller 120 increments the counter but does not interrupt the main processor 110. If C polls the futex word associated with 2, it will note that an interrupt has arrived.
11. C sleeps.
12. The scheduler 112 sees that interrupt 2 was delivered (the interrupt controller 120 provides a simple mechanism for enumerating interrupts that have fired since it was last interrogated) while C was running and marks B as runnable (by doing futex_wake on the futex word associated with interrupt 2). The threshold of interrupt 1 is set to zero, all threads waiting for it have been woken.
13. B runs. The interrupt delivery threshold is 2.
14. B sleeps.
15. A runs. The interrupt delivery threshold is 1.

## Claims

1. A data processing apparatus (100), comprising:
a main processor (110) configured to process data by executing a plurality of threads (110a,b), wherein each thread (110a,b) is associated with a thread priority;
a memory configured to store data and connected with the main processor (110) by a memory interconnect for exchanging data between the main processor (110) and the memory; and
an interrupt controller (120) for handling a plurality of interrupts, wherein each interrupt is associated with an interrupt priority and wherein the interrupt controller (120) is configured to maintain an interrupt counter for each interrupt indicating the number of times the interrupt has been fired;
wherein the main processor (110) is further configured to implement a scheduler (112) for scheduling the execution of the plurality of threads (110a,b), wherein the scheduler (112) is configured to inform the interrupt controller (120) about (a) the thread priority of a currently running thread of the plurality of threads (110a,b) and (b) for each interrupt the highest thread priority of one or more threads of the plurality of threads (110a,b) currently waiting for the respective interrupt;
wherein the scheduler (112) is further configured to select a thread of the plurality of threads (110a,b) to be executed after the currently running thread.

2. The data processing apparatus (110) of claim 1, wherein the scheduler (112) is configured to implement a state machine (400) for each of the plurality of threads (110a,b) and wherein the state machine (400) comprises one or more sleeping states (410), a runnable state and a running state.

3. The data processing apparatus (100) of claim 2, wherein, if an interrupt of the plurality of interrupts is fired with an interrupt priority at or greater than the thread priority of the currently running thread, the scheduler (112) is configured to change any sleeping threads waiting for the interrupt to runnable threads and the sleeping thread with the highest thread priority of the sleeping threads to the running thread.

4. The data processing apparatus (100) of claim 3, wherein, when one or more sleeping threads of the plurality of threads are waiting for an interrupt, the scheduler (112) is configured to adapt the interrupt priority to the thread priority of the sleeping thread with the highest thread priority of the one or more sleeping threads waiting for the interrupt.

5. The data processing apparatus (100) of any one of the preceding claims, wherein the scheduler (112) is configured to adjust the thread priority of each thread of the plurality of threads (110a,b).

6. The data processing apparatus (100) of claim 5, wherein the scheduler (112) is configured to adjust the thread priority of a thread of the plurality of threads (110a,b) in response to resource contention.

7. The data processing apparatus (100) of any one of the preceding claims, wherein the plurality of interrupt counters indicating the number of times a respective interrupt has been fired are implemented by a plurality of memory words stored at a plurality of memory locations of the memory.

8. The data processing apparatus (100) of any one of the preceding claims, wherein for deciding whether to go to sleep the currently running thread is configured to perform for one or more interrupts a "futex_wait" like operation based on the respective memory word stored at the respective memory location of the memory and a respective expected interrupt counter value of the respective interrupt.

9. The data processing apparatus (100) of claim 8, wherein the currently running thread is configured to go to sleep, if the respective current value of the respective interrupt counter is equal to the expected interrupt counter value.

10. The data processing apparatus (100) of claim 9, wherein the scheduler (112) is configured to atomically check whether the respective current value of the respective interrupt counter is equal to the expected interrupt counter value for allowing the currently running thread to go to sleep.

11. The data processing apparatus (100) of any one of claims 7 to 10, wherein for each of the interrupts the scheduler (112) is configured to perform a "futex_wake" like operation based on the respective memory word representing the interrupt counter for the respective interrupt for waking one or more of the plurality of threads (110a,b) currently waiting for the respective interrupt to fire.

12. The data processing apparatus (100) of any one of the preceding claims, wherein the plurality of interrupts comprise one or more level-triggered interrupts and one or more edge-triggered interrupts, wherein for maintaining the respective interrupt counter for each of the one or more level-triggered interrupts the interrupt controller (120) is configured to increment the respective interrupt counter, when an interrupt line associated with the respective level-triggered interrupt is raised, and to ignore the interrupt line, until the interrupt line is lowered again.
